# EUROPEAN PATENT APPLICATION

(11) **EP 1 932 873 A1**
(43) Date of publication of application: **18.06.2008**
(21) Application number: 06821795.9
(22) Date of filing: 29.08.2006
(51) Int. Cl.: C08J 5/18, B29C 59/02, C08J 7/02, C08L 29/04, B29K 29/00, B29L 7/00

(54) **POLYVINYL ALCOHOL FILM AND METHOD FOR PRODUCING POLYVINYL ALCOHOL FILM**

(30) Priority: 02.09.2005 JP 2005254645
(71) Applicant: The Nippon Synthetic Chemical Industry Co., Ltd., Osaka-shi, Osaka 531-6029 (JP)
(72) Inventor: NAKAJIMA, Hiroyuki, Osaka-shi Osaka 531-6029 (JP)
(74) Representative: TBK-Patent
(86) International application number: PCT/JP2006/316916
(87) International publication number: WO 2007/026665

(57) **Abstract**

Disclosed are a stretched polyvinyl alcohol film and a method for producing such a film. Particularly disclosed is a stretched polyvinyl alcohol film which is prevented from shrinking under wet conditions and thus has excellent workability and mechanical strength, and a method for producing such a film. More specifically disclosed is a stretched polyvinyl alcohol film wherein a degree of shrinkage between before and after a film treatment, wherein the film is immersed in water at 20°C for 10 hours and then dried at 30°C for 30 minutes, is at most 3 % in the longitudinal direction and at most 3 % in the lateral direction.

## Description

### TECHNICAL FIELD

The present invention relates to a stretched polyvinyl alcohol film and a method for producing the film. For further details, the invention relates to a stretched polyvinyl alcohol film, which is prevented from shrinking in wetting and is excellent in workability and mechanical strength, and a method for producing the film.

### BACKGROUND ART

Conventionally, a biaxially stretched polyvinyl alcohol film has preferably been used as agricultural materials, particularly, raw materials for covering an internally extended special curtain used for heat retaining property or heat insulating property in a greenhouse, utilizing characteristics such as far-infrared ray absorbency, hydrophilic property or weather resistance thereof (refer to Japanese Unexamined Patent Publication Nos. 2003-311893 and 2004-195816, for example).

However, as the polyvinyl alcohol film is always exposed with moisture in uses as described above, moisture causes the film to swell once and thereafter strain affected in manufacturing the film occasionally causes irreversible shrinkage. This irreversible shrinkage is remarkable in the stretched polyvinyl alcohol film and remarkably deteriorates the grade of final products.

If the polyvinyl alcohol film in agricultural material use is shrank and the size of the film in shipping is decreased by a few percentages in materials for covering a curtain, the area to be essentially covered can not be covered totally. Therefore, it has been desired that the polyvinyl alcohol film be prevented from shrinking.

### DISCLOSURE OF INVENTION

Then, through earnest studies in view of the present situation, the inventors of the present invention have completed the present invention by finding out that a stretched polyvinyl alcohol film, in which a degree of shrinkage of the film before and after a treatment, wherein the film is immersed in water at a temperature of 20°C for 10 hours and then dried at a temperature of 30°C for 30 minutes, is at most 3 % in a longitudinal direction and at most 3 % in a lateral direction, meets the above-mentioned object.

In the present invention, it is preferable that the stretched polyvinyl alcohol film is treated with water and then dried.
In the present invention, the preferable embodiments are as follows: the temperature of treating water is 5 to 60°C, the time for treating with water is 5 to 180 seconds, the drying is performed by hot air at a temperature of 40 to 150°C, the drying time is 5 seconds to 5 minutes, and the stretched polyvinyl alcohol film is a polyvinyl alcohol film biaxially stretched by 3 to 5 times in a longitudinal direction and by 3 to 5 times in a lateral direction.

### BEST MODE FOR CARRYING OUT THE INVENTION

The present invention is specifically described hereinafter.

The polyvinyl alcohol film of the present invention is a stretched polyvinyl alcohol film, in which a degree of shrinkage of the film before and after being immersed in water at a temperature of 20°C for 10 hours and then dried at a temperature of 30°C for 30 minutes is at most 3 % in a longitudinal direction and at most 3 % in a lateral direction.

A method for measuring a degree of shrinkage of the film is explained as follows. A test piece in 100 mm×100 mm of the film is immersed in water at a temperature of 20°C for 10 hours. Then, the test piece is pulled out and surface-attached moisture is wiped off. Finally, the film is dried under an atmosphere of 30°C for 30 minutes. The size of the film before and after the treatment is measured and a degree of shrinkage of the film before and after the treatment is calculated.

The polyvinyl alcohol film used in the present invention employs polyvinyl alcohol resin as raw materials. The resin is not particularly limited and can be manufactured by known methods.

That is to say, the polyvinyl alcohol resin is obtained by hydrolyzing a vinyl ester polymer obtained by polymerizing a vinyl ester compound.

Examples of such vinyl ester compounds include: vinyl formate, vinyl acetate, vinyl trifluoroacetate, vinyl propionate, vinyl butyrate, vinyl caprate, vinyl laurylate, vinyl versatate, vinyl palmitate and vinyl stearate. These vinyl ester compounds are used alone or in combination. Among them vinyl acetate is practically appropriate.

In the present invention, other monomers can also be copolymerized by approximately 0.5 to 10 % by mole in the scope of not deteriorating the object of the present invention. Examples of such monomers include olefins such as propylene, isobutylene, α-octene, α-dodecene and α-octadecene, unsaturated acids, salts thereof, or monoalkyl or dialkyl esters, such as acrylic acid, methacrylic acid, crotonic acid, maleic acid, maleic anhydride and itaconic acid, nitriles such as acrylonitrile and methacrylonitrile, amides such as acrylamide and methacrylamide, olefin sulfonic acids or salts thereof such as ethylene sulfonic acid, allyl sulfonic acid and methallyl sulfonic acid, alkyl vinyl ethers, N-acrylamide methyltrimethylammonium chloride, allyltrimethylammonium chloride, dimethyldiallylammonium chloride, dimethylallyl vinyl ketone, N-vinylpyrrolidone, vinyl chloride, vinylidene chloride, polyoxyalkylene (meth)allyl ethers such as polyoxyethylene (meth)allyl ether and polyoxypropylene (meth)allyl ether, polyoxyalkylene (meth)acrylates such as polyoxyethylene (meth)acrylate and polyoxypropylene (meth)acrylate, polyoxyalkylene (meth)acrylamides such as polyoxyethylene (meth)acrylamide and polyoxypropylene (meth)acrylamide, polyoxyethylene(1-(meth)acrylamide-1,1-dimethylpropyl)ester, polyoxyethylene vinyl ether, polyoxypropylene vinyl ether, polyoxyethylene allylamine, polyoxypropylene allylamine, polyoxyethylene vinylamine, polyoxypropylene vinylamine, 3,4-diacetoxy-1-butene, vinyl ethyl carbonate, and isopropenyl acetate.

Polymerization (or copolymerization) methods are not particularly limited but known polymerization methods such as solution polymerization, emulsion polymerization and suspension polymerization are optionally used. Solution polymerization employing alcohols such as methanol, ethanol or isopropyl alcohol as solvent is preferable.

A polymerization reaction is performed by using known radical polymerization catalysts such as azobisisobutyronitrile, acetyl peroxide, benzoyl peroxide and lauroyl peroxide, and a reaction temperature is preferably 35 to 200°C, more preferably 50 to 80°C.

The hydrolysis of an obtained vinyl ester polymer is performed by dissolving the polymer in an alcohol or an alcohol/fatty ester mixed solvent in the presence of an alkali catalyst. Examples of alcohols include methanol, ethanol and butanol. Examples of such fatty ester solvent include methyl acetate, ethyl acetate and butyl acetate, with which benzene and hexane may be used together. The concentration of the copolymer in alcohol is preferably 20 to 50 % by weight.

Examples of a usable hydrolyzing catalyst include alkali catalysts such as hydroxides and alcoholates of alkali metals, for example, sodium hydroxide, potassium hydroxide, sodium methylate, sodium ethylate and potassium methylate. The used amount of such a catalyst is preferably 1 to 100 millimolar equivalent with respect to a vinyl ester copolymer. According to circumstances, the hydrolysis can also be performed by acid catalysts such as hydrochloric acid, sulfuric acid and para-toluenesulfonic acid.

A degree of hydrolysis of polyvinyl alcohol resin is preferably at least 90 % by mole, more preferably at least 95 % by mole and more specially preferably at least 99 % by mole. The degree of hydrolysis less than the lower limit brings a tendency to deteriorate water resistance of the resin.

The viscosity of 4 % by weight-aqueous solution of polyvinyl alcohol resin at 20°C is preferably 2.5 to 100 mPa·s, more preferably 2.5 to 70 mPa·s (Pascal seconds) and particularly preferably 2.5 to 60 mPa·s. The viscosity less than the lower limit brings a tendency to deteriorate mechanical strength of the film, while the viscosity more than the upper limit brings a tendency to deteriorate film-forming properties. The above-mentioned viscosity is measured in conformance with JIS K6726.

In addition, with regard to polyvinyl alcohol resin used in the present invention, the amount of contained sodium acetate is preferably at most 0.8 % by weight, more preferably at most 0.5 % by weight in order to improve heat resistance and color protection power.

Methods for obtaining a polyvinyl alcohol film by using the above-mentioned polyvinyl alcohol resin are not particularly limited but the film can be manufactured by known methods; examples of the preparation are described below and yet not limited thereto.

With regard to polyvinyl alcohol resin solution used for producing a polyvinyl alcohol film (film formation), polyvinyl alcohol resin aqueous solution such that polyvinyl alcohol resin content (concentration) is 5 to 70 % by weight is preferably prepared, and polyvinyl alcohol resin aqueous solution such that the content is 10 to 60 % by weight is prepared more preferably.

Such aqueous solution may properly be blended as required with usual chemical additives such as: polyhydric alcohols such as ethylene glycol, glycerin, polyethylene glycol, diethylene glycol and triethylene glycol, antioxidants such as phenol and amine, stabilizers such as phosphates, colorant, perfume, extender, antifoaming agent, release agent, ultraviolet absorbing agent, inorganic pulverulent body and surface-active agent, in the scope of not deteriorating the effect of the present invention. In addition, water-soluble resin except polyvinyl alcohol, such as starch, carboxymethyl cellulose, methyl cellulose and hydroxymethyl cellulose, may be mixed.

Subsequently, the polyvinyl alcohol resin aqueous solution prepared in the above is formed into a film by a film forming machine (an extruder). Otherwise, the aqueous solution can also be once dried and then pelletized or flaked, and thereafter supplied to an extruder to form a film.

If the processes of preparation and film formation of a polyvinyl alcohol resin-water composition is performed by using one extruder, it is necessary to note uniform mixing and film forming stability, for example, by increasing L/D, using a multi-screw extruder and utilizing a gear pump.

A melt kneading temperature in an extruder is preferably 55 to 160°C. It is not preferable that the temperature less than the lower limit brings a tendency to cause a poor film surface, while the temperature higher than the upper limit brings a tendency to cause a foaming phenomenon. The film formed by extruding is subsequently dried. The drying temperature is preferably 70 to 120°C, more preferably 80 to 100°C. The temperature less than the lower limit brings a tendency such that the drying time of the film is unnecessarily prolonged, and moisture remains so much as to have a bad influence on the succeeding process, while the temperature more than the upper limit brings a tendency such that moisture of the film is lost so much as to be hardened and not sufficiently stretched in the stretching process.

Thus, a polyvinyl alcohol film is obtained. In the present invention, such a film needs to be stretched so as to stably allow physical properties such as water resistance, flexibility, mechanical strength and oxygen insulating property, and the stretching method is described below.

With regard to stretching, a film may be uniaxially stretched in a longitudinal (machine) direction but yet preferably biaxially stretched in both of longitudinal direction and lateral direction in view of further improving the above-mentioned physical properties.

Such a biaxial stretching may be either of serial biaxial stretching and simultaneous biaxial stretching. With regard to biaxial stretching, the moisture content of the polyvinyl alcohol film obtained in the above is preferably adjusted to 5 to 30 % by weight, more preferably 20 to 30 % by weight. It is not preferable that the moisture content out of the above-mentioned range brings a tendency such that stretching ratio can not sufficiently increase. The adjustment of the moisture content is not particularly limited. Examples of the adjustment include a method for adjusting the moisture content in drying the above-mentioned polyvinyl alcohol film, and a method for adjusting the moisture content by performing water immersion, water spray or moisture conditioning for the polyvinyl alcohol film with a moisture content of less than 5 % by weight.

After performing a biaxial stretching, heat setting is preferably performed. Temperature lower than the melting point of polyvinyl alcohol resin is preferably selected for the temperature of the heat setting treatment. However, if the temperature is lower than the melting point by at least 80°C, the dimensional stability may become poor and a degree of shrinkage may be increased. And if the temperature is higher than the melting point, thickness variation of the film may be increased. For example, in the case where polyvinyl alcohol resin is a hydrolyzed product of a vinyl acetate homopolymer, heat setting temperature is preferably 140 to 250°C and heat setting time is preferably 1 to 30 seconds, more preferably 5 to 10 seconds.

The stretching ratio is not particularly limited; yet, the stretching ratio in a longitudinal direction is preferably 3 to 5 times, more preferably 3 to 4.5 times, and the stretching ratio in a lateral direction is preferably 3 to 5 times, more preferably 3 to 4 times. If the stretching ratio in a longitudinal direction is less than the lower limit, physical properties may be difficult to be improved by the stretching. While, if the stretching ratio is more than the upper limit, the film may be easily split in a longitudinal direction. If the stretching ratio in a lateral direction is less than the lower limit, physical properties may be difficult to be improved by the stretching, and if the stretching ratio is more than the upper limit, the film may be ruptured.

The thickness of a stretched polyvinyl alcohol film is preferably 5 to 50 µm, and particularly a thickness of 10 to 40 µm is favorable in industrial productivity.

Thus, a stretched polyvinyl alcohol film is obtained. In the present invention, a degree of shrinkage of the film before and after being immersed in water at a temperature of 20°C for 10 hours and then dried at a temperature of 30°C for 30 minutes is at most 3 % in a longitudinal direction and at most 3 % in a lateral direction. A degree of shrinkage in a longitudinal direction is preferably at most 2.5 %, more preferably at most 2 %, and a degree of shrinkage in a lateral direction is preferably at most 2.5 %, more preferably at most 2 %. If the degree of shrinkage becomes more than the upper limit, the dimensional change of the film may be so increased as to deteriorate commercial value.

A method for obtaining a polyvinyl alcohol film having the above-mentioned specific degree of shrinkage is not particularly limited; yet, it is most preferable that a stretched polyvinyl alcohol film is treated with water and thereafter dried. The producing method is described below.

The treatment with water and drying is performed for a stretched polyvinyl alcohol film. With regard to such water treatment, the film is preferably treated with water of 5 to 60°C, more preferably water of 10 to 50°C. If the temperature is lower than the lower limit, sufficient swelling and relaxation may be not caused and dimensional change may be not stabilized within predetermined time. And if the temperature is higher than the upper limit, a part of the film may be melted and resin quantity may be decreased. The treating time with water can properly be selected in accordance with the temperature, preferably 5 to 180 seconds, more preferably 10 to 120 seconds. If the immersion time is less than the lower limit, sufficient strain relaxation effect may be hard to obtain. And if the immersion time is more than the upper limit, drying time is prolonged so much as not to be economical and preferable in an industrial aspect.

The treatment with water is not particularly limited and examples thereof include immersion in water, spraying with water, steam treatment and applying with water, which can also be used together. After the immersion treatment, cleaning treatment by showering may be performed on the surface for the purpose of obtaining cleanliness.

After being treated with water, industrially, attached water to the surface is preferably removed by an air shower with no contact, and additionally moisture is preferably removed subsequently by a nip roll with contact.

Drying is performed after removing moisture on the surface. The drying temperature is preferably 40 to 150°C, more preferably 60 to 120°C. If the drying temperature is less than the lower limit, the film may be insufficiently dried and so softened as to cause disadvantage in the next processing. And if the drying temperature is more than the upper limit, the film may be excessively dried and so hardened as to cause disadvantage in the next processing.

Specific examples of such a method for drying may include a method for drying by directly contacting a film with a metal roll or a ceramic roll. However, as the method may make crystallinity so high as to bring a high possibility of remarkably deteriorating moisture permeability and heat-sealing properties of the film, a dryer of a noncontact type is preferably used. And a hot-air dryer such that heated air is blown over the film is used more appropriately than a type such that a heater directly faces the film.

The time for drying is preferably 5 seconds to 5 minutes, more preferably 10 seconds to 3 minutes. If the heating time is less than the lower limit, the film may be insufficiently dried and so softened as to cause disadvantage in the next processing. And if the drying time is more than the upper limit, drying time may be too long industrially to have difficulty in designing the processes.

In the case where the stretched polyvinyl alcohol film is wound up again into a roll form after the treatment with water and drying, the moisture amount of the film is preferably set to at most 3 % by weight, more preferably 0.5 to 3 % by weight. If the moisture amount is more than the upper limit, the films may cause blocking each other in a film roll as to cause a problem of breaking the film in winding off for processing again.

In the case where next processing such as adhesion of heat seal or cutting is performed for the stretched polyvinyl alcohol film continuously after performing the treatment of the present invention, the moisture amount in the film is preferably retained at 0.5 to 20 % by weight. The amount of moisture enables lowing and widening the temperature range for heat sealing, and seal failure in the next processing is restrained from occurring. If the amount of moisture is less than the lower limit, the above-mentioned effect may be hard to obtain, and if the moisture amount is more than the upper limit, moisture may rise to the surface of the film to cause seal failure.

Laminating with heat and ultrasonic waves is performed for the stretched polyvinyl alcohol film treated by the method of the present invention.

With regard to sticking together, the moisture content of the film is preferably set to 0.5 to 20 % by weight, more preferably 0.8 to 10 % by weight. If the moisture content is less than the lower limit, cracks may be caused in the film, and if the moisture content is more than the upper limit, softening due to moisture may develop so much as to deteriorate seal strength.

### EXAMPLES

The present invention is hereinafter described more specifically by referring to examples, and is not limited to the following examples unless the present invention oversteps the scope thereof.
'Part' and '%' in the examples signify the basis of weight unless otherwise specified.

### EXAMPLE 1

Polyvinyl alcohol aqueous solution such that 40 parts of polyvinyl alcohol (a viscosity of 40 mPa·s at 20°C in 4 % by weight-aqueous solution, a degree of hydrolysis of 99.7 % by mole, a sodium acetate content of 0.3 % by weight) was dissolved in 60 parts of water was supplied by a metering pump through a hopper of a twin-screw extruder-type kneader (screw L/D=40) such that jacket temperature was set at 60 to 150°C, kneaded and discharged on the conditions of a discharge amount of 500 kg/hr.

This discharge was immediately pumped into a single-screw extruder (screw L/D=30), kneaded at a temperature of 85 to 140°C, thereafter extruded from a T die into a cast roll at 5°C, and dried by a hot-air dryer at 90°C for 30 seconds to produce a polyvinyl alcohol film (A) (a thickness of 150 µm) with a moisture content of 25% by weight. Subsequently, the film (A) was stretched by 3.8 times in a longitudinal direction, thereafter stretched by 3.8 times in a lateral direction with a tenter, and subsequently heat-set at a temperature of 180°C for 8 seconds to obtain a biaxially stretched polyvinyl alcohol film (B) (a thickness of 14 µm).

The biaxially stretched polyvinyl alcohol film (B) obtained in the above was immersed in water at 30°C for 30 seconds to thereafter wash the surface thereof by showering with a water amount of 100 ml/second and then blow off the surface water by an air shower for jetting out air of 50°C at a wind velocity of 30 m/minute from a slit with a slit width of 3 mm.

This film was further drained off by a nip roll and thereafter dried in a hot-air circulating type dryer set at 100°C for 2 minutes to obtain a biaxially stretched polyvinyl alcohol film (C) (a thickness of 14 µm) with a moisture content of 2.8 % by weight.

A test piece of 100 mm×100 mm was cut out from the obtained biaxially stretched polyvinyl alcohol film (C) and immersed in water at 20°C for 10 hours to then pull up the film and wipe off surface-attached moisture, which film was thereafter dried under an atmosphere of 30°C for 30 minutes by using a hot-air circulating type dryer ("hot-air circulating type dryer FC-610", manufactured by ADVANTEC INC.) to then measure the size and calculate a degree of shrinkage thereof, which was 1.5 % in a longitudinal direction and 0.5 % in a lateral direction.

Separately, the above-mentioned test piece was ripped up so that the film plane makes an angle of 90 degrees with the blade plane of a commercially available cutter knife. The cut plane was observed by 300 times magnification with an electron microscope, and no cracks were observed. In addition, a sample piece having a width of 15 mm and a length of 150 mm was produced to measure (breaking) mechanical strength by an autograph AG-100 manufactured by SHIMADZU CORPORATION. The measured strength was 172 MPa.

### EXAMPLE 2

A biaxially stretched polyvinyl alcohol film (C) with a moisture content of 8.0 % by weight was obtained through the same treatment as in Example 1 except for modifying drying time in the final hot-air circulating type dryer into 1 minute. The similarly calculated degree of shrinkage was 1.6 % in a longitudinal direction and 0.4 % in a lateral direction. The test piece was cut in the same manner but yet no cracks were observed, and mechanical strength was 169 MPa.

### EXAMPLE 3

A biaxially stretched polyvinyl alcohol film (C) with a moisture content of 3.4 % by weight was obtained through the same treatment as in Example 1 except for modifying water temperature during immersion in water into 45°C. The similarly calculated degree of shrinkage was 1.1 % in a longitudinal direction and 0.3 % in a lateral direction. The test piece was cut in the same manner but yet no cracks were observed, and mechanical strength was 178 MPa.

### EXAMPLE 4

A biaxially stretched polyvinyl alcohol film (C) with a moisture content of 3.2 % by weight was obtained through the same treatment as in Example 1 except for modifying immersion time during immersion in water into 2 minutes. The similarly calculated degree of shrinkage was 1.0 % in a longitudinal direction and 0.9 % in a lateral direction. The test piece was cut in the same manner but yet no cracks were observed, and mechanical strength was 181 MPa.

### EXAMPLE 5

A biaxially stretched polyvinyl alcohol film (C) with a moisture content of 3.4 % by weight was obtained through the same treatment as in Example 1 except for modifying temperature in the hot-air circulating type dryer into 70°C. The similarly calculated degree of shrinkage was 1.2 % in a longitudinal direction and 0.8 % in a lateral direction. The test piece was cut in the same manner but yet no cracks were observed, and mechanical strength was 175 MPa.

### EXAMPLE 6

A biaxially stretched polyvinyl alcohol film (C) with a moisture content of 2.6 % by weight was obtained through the same treatment as in Example 1 except for modifying stretching ratio of the polyvinyl alcohol film (B) into 4.3 times in a longitudinal direction and 3.9 times in a lateral direction. The similarly calculated degree of shrinkage was 1.3 % in a longitudinal direction and 0.8 % in a lateral direction. The test piece was cut in the same manner but yet no cracks were observed, and mechanical strength was 185 MPa.

### COMPARATIVE EXAMPLE 1

A degree of shrinkage of the biaxially stretched polyvinyl alcohol film (B) without performing water treatment and drying treatment in Example 1 was similarly calculated as 6.5 % in a longitudinal direction and 7.0 % in a lateral direction. The moisture content of the film after being produced was 0.2 % by weight, and the test piece was cut in the same manner as the above to observe the cut plane; then, cracks were observed, and mechanical strength thereof was 82 MPa.

### INDUSTRIAL APPLICABILITY

A stretched polyvinyl alcohol film of the present invention does not shrink even in contacting with water and is so excellent in workability and mechanical strength as to be useful for a polyvinyl alcohol film used for food packaging materials, industrial packaging materials, industrial covering materials, agricultural materials and constructional materials, particularly, useful as a polyvinyl alcohol film used for covering materials for protecting a product surface in industrial processing steps, curtains in a greenhouse and whole covering sheets in a field in agricultural materials. A method for producing a polyvinyl alcohol film of the present invention can prevent shrinkage due to moisture, particularly, is effective for a stretched polyvinyl alcohol film, and can provide a polyvinyl alcohol film having excellent mechanical strength.

## Claims

1. A stretched polyvinyl alcohol film having a degree of shrinkage of at most 3 % in a longitudinal direction and at most 3 % in a lateral direction, wherein the degree of shrinkage is obtained by measuring a shrinkage of the film which is dried at a temperature of 30°C for 30 minutes after being immersed in water at a temperature of 20°C for 10 hours.

2. The polyvinyl alcohol film of claim 1, wherein the stretched polyvinyl alcohol film is first treated with water and then dried.

3. A method for producing a polyvinyl alcohol film comprising a step of drying a stretched polyvinyl alcohol film after the film being treated with water.

4. The method for producing a polyvinyl alcohol film of claim 3, wherein a temperature of the treating water is 5 to 60°C.

5. The method for producing a polyvinyl alcohol film of claim 3 or 4, wherein a treating time of the film with water is 5 to 180 seconds.

6. The method for producing a polyvinyl alcohol film of any one of claims 3 to 5, wherein the treatment of the film with water is performed by a method of at least one kind selected from immersion in water, spraying with water, steam treatment and applying with water.

7. The method for producing a polyvinyl alcohol film of any one of claims 3 to 6, wherein the drying is performed by hot air at a temperature of 40 to 150°C.

8. The method for producing a polyvinyl alcohol film of any one of claims 3 to 7, wherein time for the drying is 5 seconds to 5 minutes.

9. The method for producing a polyvinyl alcohol film of any one of claims 3 to 8, wherein the stretched polyvinyl alcohol film is a polyvinyl alcohol film biaxially stretched by 3 to 5 times in a longitudinal direction and by 3 to 5 times in a lateral direction.

10. A polyvinyl alcohol film, which is obtained by the method of any one of claims 3 to 9.

11. A method for producing a polyvinyl alcohol film, wherein the polyvinyl alcohol film of claim 1, 2 or 10 is stuck together at a moisture content of 0.5 to 20 % by weight.
